# EUROPÄISCHE PATENTSCHRIFT

(11) **EP 0 824 660 B1**
(45) Veröffentlichungstag und Bekanntmachung des Hinweises auf die Patenterteilung: **05.04.2000**
(21) Anmeldenummer: 96919703.7
(22) Anmeldetag: 07.05.1996
(51) Int. Cl.: F25D 23/06, F24C 15/34

(54) **WÄRMEISOLIERENDES GEHÄUSE**
HEAT-INSULATING HOUSING
BOITIER CALORIFUGE

(30) Priorität: 31.05.1995 DE 19520020
(43) Veröffentlichungstag der Anmeldung: 25.02.1998
(73) Patentinhaber: BSH Bosch und Siemens Hausgeräte GmbH, 81669 München (DE)
(72) Erfinder: WENNING, Udo, D-89537 Giengen (DE); WACKER, Wolfram, D-89568 Hermaringen (DE); EBERHARDT, Hans-Frieder, D-89542 Herbrechtingen (DE)
(86) Internationale Anmeldenummer: EP9601910
(87) Internationale Veröffentlichungsnummer: WO9638697

(56) Entgegenhaltungen:
- EP-A- 0 658 733
- DE-A- 1 911 903
- DE-A- 3 235 708
- DE-A- 3 940 649
- DE-C- 653 374
- DE-C- 4 324 996
- DE-U- 9 204 365
- US-A- 2 729 863
- US-A- 2 795 020
- US-A- 3 156 975
- US-A- 4 668 555
- US-A- 4 745 015
- US-A- 4 917 256
- US-A- 5 242 647
- US-A- 5 350 777

## Beschreibung

Die Erfindung betrifft ein wärmeisolierendes Gehäuse mit wenigstens einem Gehäusenutzraum, welcher von Gehäusewandungen und zumindest einer Tür umschlossen ist.

Thermische Isolierungen werden gemäß dem bekannten Stand der Technik auf verschiedene Weise realisiert. So kommen auf dem Gebiet der Hausgeräte wie z.B. Kältegeräte, Herde oder dergleichen zur Isolierung ihrer Nutzräume unterschiedliche Isolierwerkstoffe zum Einsatz. Während bei Herden, die den Backraum umgrenzende Herdmuffel an ihrer Außenseite mit zur Wärmedämmung dienenden Faserisolierwerkstoffen versehen ist, finden bei Kältegeräten zu deren Wärmeisolation Hartschaumstoffe Anwendung, welche als flüssige Ausgangskomponenten zwischen einem Metallaußengehäuse und einer Kunststoffinnenverkleidung eingebracht werden und nach Ablauf einer chemischen Reaktion beide miteinander verbinden. Außerdem kommen zu Isolationszwecken auf dem Gebiet der Kältegeräte anstelle der Hartschaumisolierung noch Vakuumisolationspanels zum Einsatz, welche in den Zwischenraum zwischen dem Metallaußengehäuse und der Kunststoffinnenverkleidung eingebracht sind. Hierbei sind die Übergänge der einzelnen Wandabschnitte des wärmeisolierenden Gehäuses eines Kältegerätes weiterhin mit Kunststoffhartschaum verfüllt. Die bis jetzt auf dem Gebiet der Haushaltsgeräte zum Einsatz kommenden thermischen Isolationstechniken sind, soweit es Kältegeräte betrifft, besonders im Falle eines zunehmend an Bedeutung gewinnenden Recycling der Geräte nachteilig, da die das wärmeisolierende Gehäuse bildenden unterschiedlichen Werkstoffe durch die Hartschaumisolierung miteinander zu einer Einheit verbunden sind, deren Auftrennung in ihre Einzelwerkstoffe aufgrund der Adhäsionswirkung des flüssigen Schaumes aufwendige Trennverfahren bedeuten. Was die bei Haushaltsherden zum Einsatz kommenden Faserwärmedämmstoffe anbelangt, bedingen diese aufgrund ihres Fasercharakters eine zeitaufwendige Anbringung an der zu isolierenden Herdmuffel und bergen zudem die Gefahr in sich, daß Einzelfasern aus dem Faserverbund des Dämmstoffes herausgelöst werden und sich an Kontaktstellen elektrischer Funktionseinheiten absetzen, wo sie aufgrund ihres isolierenden Charakters Funktionsstörungen am Herd hervorrufen.

Die US-A-4 668 555, die den nächstkommenden Stand der Technik bildet, zeigt ein wärmeisolierendes Gehäuse gemäß dem Oberbegriff des Anspruchs 1.

Aufgabe der Erfindung ist es, für ein Gehäuse gemäß dem Oberbegriff des Anspruches 1 Maßnahmen vorzuschlagen, aufgrund welcher auf einfache Weise die Nachteile des Standes der Technik vermieden sind und welche gleichzeitig auf einfache Weise die Möglichkeit eröffnen, die thermische Isolationswirkung des Gehäuses deutlich zu verbessern.

Diese Aufgabe wird gemäß der Erfindung durch die Merkmale des Anspruchs 1 gelöst.

Durch die erfindungsgemäße Lösung ist ein wärmeisolierendes Gehäuse geschaffen, welches im Recyclingfall mit geringem technischen Aufwand und somit kostengünstig in weitestgehend reine Werkstoffkomponenten zerlegbar ist, welche somit wiederum als technisch hochwertige Werkstoffe einsetzbar sind. Ferner wird durch den erfindungsgemäßen Gehäuseaufbau ein fertigungsgünstiger Isoliervorgang erreicht, bei dessen Ablauf sich kostenintensive Einrichtungen zum Schutze der Umwelt und der Gesundheit des Fertigungspersonals erübrigen. Außerdem kann auf Abdichtmaßnahmen, wie sie bisher zur Verhinderung des Austritts der in flüssigen Ausgangskomponenten eingebrachten Hartschaumisolierung bei Kältegeräten zur Anwendung gekommen sind, verzichtet werden.

Desweiteren ist eine Beeinflussung elektrischer Gerätefunktionen durch eine ungewollte Unterbindung elektrischer Kontaktstrecken infolge von isolierenden Einzelfasern von Faserisolierstoffen im wesentlichen ausgeschlossen.

Nach einer weiteren bevorzugten Ausführungsform des Gegenstandes der Erfindung ist vorgesehen, daß die Begrenzungswände weitestgehend formsteif ausgebildet sind und der in den von ihnen umschlossenen Zwischenraum eingebrachte Wärmeisolationsmaterial offenzellig und weitestgehend druckfest ausgebildet ist.

Durch die formsteifen Begrenzungswände kann der in den Zwischenraum eingefüllte Wärmeisolierstoff zur Verbesserung der wärmeisolierenden Eigenschaften der Gehäusewandungen verdichtet werden, ohne daß die Begrenzungswände zusätzlich von einer Stützform abgestützt sein müssen. Außerdem ermöglicht der offenzellig ausgebildete Wärmeisolierstoff nicht nur eine wesentlich vereinfachte, sondern auch eine deutlich tiefere Druckabsenkung im Zwischenraum gegenüber dem Umgebungsdruck der Gehäusewandungen, wobei gleichzeitig durch die formsteif ausgebildeten Begrenzungswände und dem druckfest ausgebildeten Isolierstoff auch nach einer Evakuierung des Zwischenraums im wesentlichen ebene Oberflächen erzeugt sind, die ohne weitere Maßnahmen zugleich als Sichtflächen für die Gehäusewandungen dienen können.

Entsprechend einer weiteren bevorzugten Ausführungsform des Gegenstandes der Erfindung ist vorgesehen, daß im mit dem Wärmeisolationsmaterial verfüllten Zwischenraum der Luftdruck gegenüber dem Umgebungsdruck des Gehäuses abgesenkt ist, wobei die den Zwischenraum umgrenzenden Begrenzungswände aus einem wenigstens annähernd der Druckdifferenz entsprechend diffusionsfesten Werkstoff gebildet sind.

Durch eine solche Lösung läßt sich eine hinsichtlich ihrer Langzeitwirkung gleichbleibend effektive Wärmeisolierung für Gehäusewandungen ausbilden.

Eine ausreichend gute Wärmeisolierung läßt sich bereits erzeugen, wenn nach einer nächsten vorteilhaften Ausgestaltung des Gegenstandes der Erfindung vorgesehen ist, daß der Luftdruck in dem mit dem offenzelligen, druckfest ausgebildeten Wärmeisolierstoff ausgefüllten Zwischenraum zwischen 0,01 mbar und 100 mbar beträgt, aber vorzugsweise unter 1 mbar liegt.

Besonders ebene Oberflächen im Falles eines evakuierten Zwischenraumes zwischen den Begrenzungswänden ergibt sich, wenn nach einer weiteren vorteilhaften Ausgestaltung des Gegenstandes der Erfindung vorgesehen ist, daß das druckfeste, offenzellige Wärmeisolationsmaterial annähernd dem Abstand zwischen den beiden Begrenzungswänden entspricht.

Eine besonders wirkungsvolle Wärmeisolation für die Gehäusewandungen und eine besonders effektive Abstützung im Falle einer Evakuierung des Zwischenraumes wird für die Begrenzungswände erzielt, wenn nach einer weiteren vorteilhaften Ausgestaltung des Gegenstandes der Erfindung vorgesehen ist, daß das druckfeste, offenzellige Wärmisolationsmaterial im wesentlichen über die gesamte Flächenausdehnung des Gehäuses angeordnet ist.

Gemäß einer weiteren bevorzugten Ausführungsform des Gegenstandes der Erfindung ist vorgesehen, daß das offenzellige, druckfeste Wärmeisolationsmaterial aus während des Befüllvorganges des Zwischenraumes ständig verdichteten Aerogelen mit einer Dichte von 80 bis 300 kg/m³ besteht, aber vorzugsweise die Dichte im Bereich von 80 bis 120 kg/m3 liegt.

Durch eine derartige Befüllung des Zwischenraums werden für die Gehäusewandungen eine Wärmeleitzahl erreicht, deren Wert auch ohne Absenkung des Luftdruckes im Zwischenraum zwischen den Begrenzungswänden deutlich unter denen der bisher auf dem Gebiet der Hausgeräte zum Einsatz kommenden Isolationstechniken liegt.

Gemäß einer bevorzugten Ausführungsform des Gegenstandes der Erfindung kann vorgesehen sein, daß das druckfeste, offenzellige Wärmeisolationsmaterial aus Plattenkörpern mit an ihren Verbindungsstellen untereinander angeordneten Fügehilfen gebildet ist.

Durch eine solche Art von lose in den Zwischenraum einbringbarem Isoliermaterial ist auch bei biegsamen Begrenzungswänden gewährleistet, daß im Evakuierungsfall des Zwischenraumes ebene Oberflächen und somit auch einwandfreie Sichtflächen für die Gehäusewandungen gebildet sind.

Nach einer weiteren bevorzugten Ausführungsform des Gegenstandes der Erfindung ist vorgesehen, daß die Plattenkörper aus ausgehärtetem Polyurethanschaum gefertigt sind.

Durch einen mit einem derartigen Isolationsmaterial verfüllten und evakuiertem Zwischenraum ergeben sich bereits Werte für die Wärmeleitzahl an den Gehäusewandungen, welche im Vergleich zu dem bisher zur Anwendung kommenden Isolationstechniken auf dem Hausgerätegebiet wesentlich geringer sind, sodaß sich ein deutlich günstigerer Energieverbrauch für ein Haushaltsgerät ergibt.

Besonders einfach auszuführen sind elektrische Anschluß- und Installationsarbeiten an Haushaltskältegeräten oder Haushaltsherden, wenn nach einer weiteren bevorzugten Ausführungsform des Gegenstandes der Erfindung vorgesehen ist, daß innerhalb des Wärmeisolationsmaterials Leerrohre zur Aufnahme von Steuer- und/oder Versorgungsleitungen angeordnet sind.

Gleichzeitig ist bei einer solchen Ausführungsform weitestgehend sichergestellt, daß durch die gezielte Einbringung der Leerrohre unbeabsichtigte Wärmebrücken vermieden sind.

Als besonders formstabil und diffusionsfest und damit besonders günstig bezüglich der Aufrechterhaltung eines Unterdruckes im Zwischenraum über lange Zeiträume haben sich Begrenzungswände erwiesen, wenn nach einer weiteren vorteilhaften Ausgestaltung des Gegenstandes der Erfindung vorgesehen ist, daß die Begrenzungswände der Gehäusewandungen aus tiefgezogenem Edelstahl gebildet sind.

Gemäß einer bevorzugten Ausgestaltung des Gegenstandes der Erfindung kann vorgesehen sein, daß die Begrenzungswände der Gehäusewandungen aus korrosionsgeschütztem Stahlblech gebildet sind.

Hierbei wird eine gegenüber Edelstahl deutlich erleichterte Bearbeitung der Begrenzungswände und somit erleichterte Herstellung der Gehäusewandungen erreicht.

Nach einer weiteren alternativen Ausgestaltung des Gegenstandes der Erfindung kann vorgesehen sein, daß die Begrenzungswände der Gehäusewandungen aus diffusionsfestem Kunststoff gebildet sind.

Begrenzungswände dieser Art zur Anwendung für Gehäusewandungen zeichnen sich neben ihrer problemlosen und somit kostengünstigen Bearbeitbarkeit noch durch geringes Gewicht und das damit verbundene günstige Handling in der Serienfertigung aus.

Entsprechend einer weiteren bevorzugten Ausführungsform des Gegenstandes der Erfindung ist vorgesehen, daß die Begrenzungswände der Gehäusewandungen hinsichtlich ihrer Abmessungen den Abmessungen der einzelnen Wandabschnitte des Gehäuses entsprechen und miteinander zu dem Gehäuse verbindbar sind.

Die modulare Aufbautechnik für ein Gehäuse ermöglicht schon bei einer relativ geringen Anzahl mit unterschiedlicher Abmessung ausgestatteten, einzelnen Gehäusewandungen gute Kombinationsmöglichkeiten der Gehäusewandungen untereinander und damit bei geringem Lageraufwand eine relativ große Vielfalt von Gehäusen unterschiedlicher Abmessungen. Ferner ermöglicht der modulare Aufbau des Gehäuses nicht nur einen deutlich geringeren Arbeitsaufwand für den Befüllvorgang des Zwischenraums mit Wärmeisolationsmaterial, sondern auch eine deutlich verringerte Evakuierzeit für diesen.

Nach einer bevorzugten Ausführungsform des Gegenstandes der Erfindung kann vorgesehen sein, daß die Begrenzungswände der Gehäusewandungen aus einer formsteifen, entsprechend den einzelnen Gehäusewandungen des Gehäuses abgewinkelten alle Gehäusewandungen miteinander verbindenden Platine gebildet sind.

Ein derartiger Gehäuseaufbau zeichnet sich durch eine über seine sämtlichen Wandabschnitte weitestgehend gleichmäßig gute Wärmeisolation aus, welche nicht durch konstruktionsbedingt zwischen den einzelnen Wandabschnitten gegebenenfalls auftretenden Wärmebrücken empfindlich beeinflußt ist.

Besonders zweckmäßig sind die Begrenzungswände ausgestattet, wenn nach einer weiteren vorteilhaften Ausgestaltung des Gegenstandes der Erfindung vorgesehen ist, daß eine der Begrenzungswände mit einem Anschluß zum Absenken des Luftdrukkes innerhalb des von den beiden Begrenzungswänden umschlossenen Zwischenraumes versehen ist.

Energetisch besonders günstig betreibbar und im Recyclingfall auf einfache Weise entsorgbar ist ein Haushaltsherd mit einer Herdmuffel, bei welchem die Herdmuffel aus einem wärmeisolierendem Gehäuse nach einem der Ansprüche 1 bis 18 gebildet ist.

Ebenso energetisch besonders günstig betreibbar und im Recyclingfall auf einfache Weise entsorgbar ist ein Haushaltskältegerät wie ein Kühl- oder Gefrierschrank, mit wenigstens einem innerhalb seines Gehäuses angeordneten und von einer Tür verschließbaren Kälteraum, wenn das Gehäuse dieses Haushaltskältegerätes nach einem der Ansprüche 1 bis 18 ausgebildet ist.

Die Erfindung ist in der nachfolgenden Beschreibung am Beispiel von zwei in der beigefügten Zeichnung vereinfacht dargestellten Kältegeräten erläutert. Es zeigen:
- Fig.1: In einem ersten Ausführungsbeispiel in vereinfachter Prinzipdarstellung ein Gehäuse eines Haushaltskältegerätes mit hintereinander im Abstand angeordneten und an ihren freien Enden mit einem Verbindungsrahmen verbundenen Begrenzungswänden,
- Fig.2: in einem vergrößerten Ausschnitt das wärmeisolierende Gehäuse mit darin angeordneten Leerrohren zur Aufnahme von Versorgungs- und Steuerleitungen für den Betrieb des Geräteaggregates,
- Fig.3: in vereinfachter Darstellung im Vertikalschnitt den Verbindungsrahmen mit unterschiedlich ausgeführtem Querschnitten und
- Fig.4: in einem zweiten Ausführungsbeispiel ein Haushaltskältegerät mit aus einzelnen Gehäusewandungsabschnitten zusammengesetzten wärmeisolierendem Gehäuse mit einer daran angeordneten Tür im Vertikalschnitt.

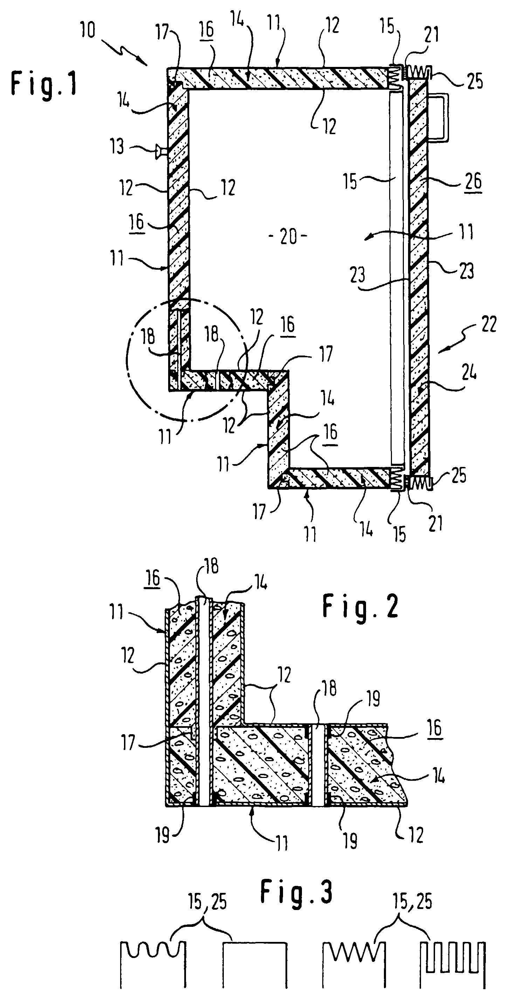

Gemäß Fig.1 ist ein bei einem Haushaltskältegerät wie z.B. einem Kühl- oder Gefrierschrank zur Anwendung kommendes wärmeisolierendes Gehäuse 10 mit Gehäusewandungen 11 gezeigt. Die Gehäusewandungen 11 sind aus zwei in Abstand zueinander angeordneten, als Begrenzungswände 12 dienenden einstückigen Platinen gebildet, welche entsprechend den Abmessungen der Gehäusewandungen 11 abgewinkelt sind und welche aus Edelstahlblech, korrosionsgeschütztem Stahlblech mit jeweils z.B. 0,5 mm Wandstärke oder einem vakuumdichten Kunststoff im Tiefziehverfahren hergestellt sind. Die zueinander beabstandeten Begrenzungswände 12, von denen die außenliegende mit einem Evakuieranschlußstutzen 13 ausgestattet ist, bilden einen Zwischenraum 14, welcher an den freien Enden der Begrenzungswände 12 mit an diesen vakuumdicht angeordneten Verbindungsrahmen 15 (siehe Fig.3) vakuumdicht abgeschlossen ist, wobei sich bereits für diese bei einer Anwendung von einem Material mit einer Wärmeleitzahl von maximal 1 W/m K gute Wärmeisolationseigenschaften gezeigt haben. Der Zwischenraum 14 ist mit einem offenzelligen, in seinem chemischen Endzustand befindlichen und druckfest ausgebildeten Wärmeisolationsmaterial 16 verfüllt, welches im vorliegenden Ausführungsbeispiel aus ausgehärtetem, zu Plattenkörpern geformten Polyurethanschaum bzw. Polyisocyanuratschaum, Polystyrolschaum oder andere offenzellige Polymerschäume besteht, dessen Plattenstärke dem Abstand zwischen den Begrenzungswänden 12 entspricht und dessen Plattenabmessungen an die Abmessungen der Gehäusewandungen 11 angepaßt sind. Die als Wärmeisolationsmaterial 16 dienenden Plattenkörper aus z.B. Polyurethanschaum sind an ihren Stoßstellen zur Vermeidung von Wärmebrücken miteinander über eine Nut- und Federverbindung 17 (siehe auch Fig.2) verbunden, wobei zur Verbindung der einzelnen Plattenkörper auch andere gängige Verbindungstechniken denkbar wären. Die Wärmeisolationsplattenkörper 16 sind mit Aussparungen zur Aufnahme von Leerrohren 18 (siehe insbesondere Fig.2) ausgestattet, welche aus schlecht wärmeleitenden Material wie beispielsweise aus Kunststoff gefertigt sein können und welche über an den Begrenzungswänden 12 vakuumdicht angeordneten Befestigungselementen 19 innerhalb des Wärmeisolationsmaterials 16 festgesetzt sowie den Außenseiten der Begrenzungswände 12 zugeführt sind. Die Leerrohre 18 dienen zur Aufnahme von nicht dargestellten Steuer- und Versorgungsleitungen, welche zum Betrieb einer nicht dargestellten Kältemaschine vorzusehen sind, welche zur Kälteerzeugung innerhalb eines als Kühl- oder Gefrierraum zur Anwendung kommenden Gehäusenutzraumes 20 dient. Dieser ist von dem wärmeisolierendem Gehäuse 10 und einer an dessen Öffnungsseite angeschlagenen und über eine Magnetdichtung 21 am Öffnungsrand des Gehäuses 10 anliegenden wärmeisolierenden Tür 22 umschlossen. Die Tür 22 ist wie die Gehäusewandungen 11 durch zwei im Abstand zueinander angeordneten, formsteif ausgebildeten und beispielsweise aus Edelstahlblech bzw. korrosionsgeschütztem Stahlblech mit jeweils z.B. 0,5 mm Materialstärke oder aus einem diffusionsfesten Kunststoff gefertigt. Durch die zueinander beabstandeten Begrenzungswände 23 an der Tür 22 ist auch hier ein Zwischenraum 24 erzeugt, welcher an den freien Stirnseiten der Begrenzungswände 23 mit Verbindungsrahmen 25 (siehe hierzu Fig.3) vakuumdicht abgeschlossen ist und welcher über die Höhe und Breite der Tür 22 mit Wärmeisolationsmaterial 26 verfüllt ist. Dieses wird wie beim Gehäuse 10 vor dem Anbringen des Verbindungsrahmens 25 in den Zwischenraum 24 eingebracht und ist im vorliegenden Ausführungsbeispiel, wie das bei den Gehäusewandungen 11 angewandte als ein in seinem chemischen Endzustand befindlicher, offenzelliger Plattenkörper z.B. aus weitestgehend druckfestem Polyurethanschaum gebildet. Der Plattenkörper ist hinsichtlich seiner Materialstärke auf den Abstand der beiden Begrenzungswände 23 abgestimmt und ist im Fall der Tür 22 einstükkig über deren Fläche angeordnet.

Zur Erhöhung der Wärmeisolationseigenschaften des Gehäuses 10 und der Tür 22 sind die von ihren Begrenzungswänden 12 bzw. 23 zusammen mit den Verbindungsrahmen 15 bzw. 25 erzeugten vakuumdichten Zwischenräume 14 bzw. 24 auf einen Druck evakuiert, welcher im Regelfall unter 1 mbar liegt. Zum Zwecke des Evakuierens der mit Wärmeisolationsmaterial 16 bzw. 26 verfüllten Zwischenräume 14 bzw. 24 des Gehäuses 10 bzw. der Tür 22 ist zum Anschluß an eine nicht dargestellte Evakuierpumpe wenigstens je ein Evakuieranschlußstutzen vorgesehen, wobei der am Gehäuse 10 dafür vorgesehene Anschlußstutzen 13 sichtbar ist, während der an der Tür 22 angeordnete Anschlußstutzen nicht gezeigt ist. Der aufgrund der evakuierten Zwischenräume 14 und 24 auf die Begrenzungswände 12 und 23 wirkende Druck wird im wesentlichen durch deren formsteife Konstruktion aber auch durch den weitestgehend druckfest ausgebildeten Plattenkörper aus Polyurethanschaum abgefangen.

Die Verbindungsrahmen 15 bzw. 25 können wie in Fig.3 dargestellt, unterschiedlich profiliert ausgebildet sein, wobei der reine rechteckige Querschnitt den geringsten Wärmeleitweg darstellt, während die anderen Querschnittsformen eine deutliche Erhöhung des Wärmeleitweges mit sich bringen.

Alternativ zu dem in Fig.1 dargestellten Gehäuseaufbau wäre es auch denkbar, das Gehäuse 10 nach dem Prinzip einer "Faltschachtel" oder aus einem einstückigen, vierseitigen Hohlkörper mit aufgesetzter Rückwand herzustellen." Derartig aufgebaute Gehäuse eignen sich beispielsweise zum Einsatz für einen Backraum umgrenzende Herdmuffeln bzw. zur Konstruktion für Klimakammern.

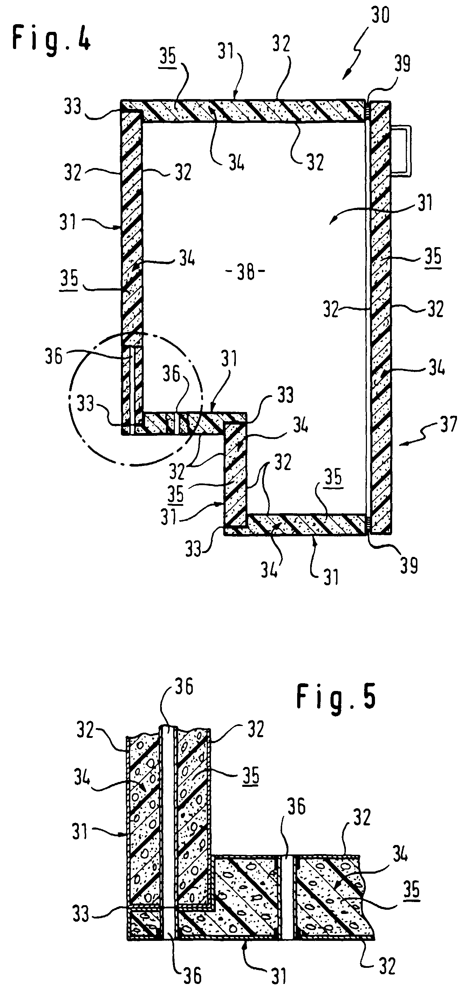

Entsprechend Fig.4 ist ein zum Einsatz für ein Haushaltskühl- oder Gefriergeräte geeignetes wärmeisolierendes Gehäuse 30 gezeigt, welches im Gegensatz zu den in Fig.1 dargestellten Gehäuse 10, wonach dessen Begrenzungswände 12 aus einer einstückigen, entsprechend den Gehäusewandungen 11 verformten Platine gebildet sind, aus einzelnen Gehäusewandungen 31 gefertigt ist. Diese weisen formsteife Begrenzungswände 32 auf und sind an ihren Verbindungsstellen untereinander mit Fügehilfen 33 (siehe insbesondere Fig.5) zur Verlängerung des Wärmeleitweges an den Stoßstellen versehen. Die weitestgehend formsteif ausgebildeten Begrenzungswände 32 umschließen einen vakuumdichten, über nicht gezeigte Anschlußstutzen für eine Vakuumpumpe evakuierbaren Zwischenraum 34, welcher mit Wärmeisolationsmaterial 35 in der Art, wie es gemäß dem ersten Ausführungsbeispiel unter Fig.1 beschrieben wurde, verfüllt ist. In das Wärmeisolationsmaterial 35 sind zur deutlichen Erleichterung der Installationsarbeiten für ein Haushaltskühl- oder -gefriergerät Leerrohre 36 (siehe insbesondere Fig.5) zur Aufnahme von nicht dargestellten Steuer- und/oder Versorgungsleitungen einbringbar, welche zum Betrieb einer Kältemaschine notwendig sind. Die einzelnen Wandabschnitte 31 umschließen zusammen mit einer analog zu diesen aufgebauten Tür 37 einen als Gehäusenutzraum dienenden Kälteraum 38. Die Tür 37 liegt in bekannter Art und Weise über eine Magnetdichtung 39 elastisch am Öffnungsrand des Gehäuses 30 dichtend auf. Der modulare Gehäuseaufbau eigent sich besonders auch zum Einsatz bei Kältezellen.

Bei dem erfindungsgemäßen Gehäuseaufbau ergeben sich Wärmeleitzahlen von 2 mW/mK bis 15 mW/wK, wodurch sich eine Reduzierung des Energieverbrauchs von wenigstens 70 % im Vergleich zu derzeit üblichen Isolationsstärken für Kältegeräte einstellt. In Umkehrung dazu kann bei einem heute üblichen Energieverbrauch eine wesentliche Vergrößerung des Gehäuse- nutzraumes, z.B. für ein Haushaltsgerät, erreicht werden.

## Patentansprüche

1. Wärmeisolierendes Gehäuse (10, 30) mit wenigstens einem Gehäusenutzraum, welcher von Gehäusewandungen (11, 22, 31, 37) und zumindest einer Tür umschlossen ist, wobei die Gehäusewandungen aus zwei im Abstand zueinander angeordneten Begrenzungswänden (12, 23, 32) gebildet sind, welche zusammen im wesentlichen einen Zwischenraum (14, 24, 34) umschließen, welcher mit einem lose einbringbaren, im chemischen Endzustand befindlichen, evakuierbaren Wärmeisolationsmaterial (16, 26, 35) erfüllt ist, **dadurch gekennzeichnet**, daß das in den Zwischenraum (14, 24, 34) eingebrachte Wärmeisolationsmaterial (16, 26, 35) aus Plattenkörpern gebildet ist, welche aus druckfestem, offenzelligem Wärmeisolationsmaterial (16, 26, 35) bestehen.

2. Wärmeisolierendes Gehäuse nach Anspruch 1, **dadurch gekennzeichnet**, daß das als Plattenkörper ausgebildete Wärmeisolationsmaterial aus offenzelligen Polymerschäumen gebildet ist.

3. Wärmeisolierndes Gehäuse nach Anspruch 1 oder 2, **dadurch gekennzeichnet**, daß die Plattenkörper aus ausgehärtetem Polyurethanschaum gefertigt sind.

4. Wärmeisolierendes Gehäuse nach Anspruch 1 oder 2, **dadurch gekennzeichnet**, daß die Plattenkörper aus ausgehärtetem Polystyrolschaum gefertigt sind.

5. Wärmeisolierendes Gehäuse nach einem der Ansprüche 1 bis 4, **dadurch gekennzeichnet**, daß im mit den Plattenkörpern (16, 26, 35) verfüllten Zwischenraum (14, 24, 34) der Luftdruck gegenüber dem Umgebungsdruck des Gehäuses (10, 30) abgesenkt ist, wobei die den Zwischenraum (14, 24, 34) umgrenzenden Begrenzungswände (12, 23, 32) aus einem wenigstens annähernd der Druckdifferenz entsprechend diffusionsfesten Werkstoff gebildet sind.

6. Wärmeisolierendes Gehäuse nach Anspruch 5, **dadurch gekennzeichnet**, daß der Luftdruck in dem mit dem offenzellig ausgebildeten, wärmeisolierenden Plattenkörpern ausgefüllten Zwischenraum (14, 24, 34) zwischen 0,1 mbar und 10 mbar beträgt, aber vorzugsweise unter 1 mbar liegt.

7. Wärmeisolierendes Gehäuse nach einem der Ansprüche 1 bis 6, **dadurch gekennzeichnet**, daß die offenzelligen Plattenkörper hinsichtlich ihrer Materialstärke annähernd dem Abstand zwischen den Begrenzungswänden (12, 23, 32) entsprechen.

8. Wärmeisolierendes Gehäuse nach einem der Ansprüche 1 bis 7, **dadurch gekennzeichnet**, daß die druckfesten, wärmeisolierenden Plattenkörper im wesentlichen über die gesamte Oberfläche des Gehäuses (10, 30) angeordnet ist.

9. Wärmeisolierendes Gehäuse nach einem der Ansprüche 1 bis 8, **dadurch gekennzeichnet**, daß die druckfesten, offenzelligen Plattenkörper mit an ihren Verbindungsstellen angeordneten Fügehilfen (17) versehen sind.

10. Wärmeisolierendes Gehäuse nach einem der Ansprüche 1 bis 9, **dadurch gekennzeichnet**, daß innerhalb der Plattenkörper Leerrohre (18, 36) zur Aufnahme von Steuer- und/oder Versorgungsleitungen angeordnet sind.

11. Wärmeisolierendes Gehäuse nach Anspruch 1, **dadurch gekennzeichnet**, daß die Begrenzungswände (12, 23, 32) weitestgehend formsteif ausgebildet sind.

12. Wärmeisolierendes Gehäuse nach einem der Ansprüche 1 oder 11, **dadurch gekennzeichnet**, daß die Begrenzungswände (12, 23, 32) der Gehäusewandungen (11, 22, 31, 37) aus tiefgezogenem Edelstahl gebildet sind.

13. Wärmeisolierendes Gehäuse nach einem der Ansprüche 1 oder 11, **dadurch gekennzeichnet**, daß die Begrenzungswände (12, 23, 32) der Gehäusewandungen (11, 22, 31, 37) aus korrosionsgeschütztem Stahlblech gebildet sind.

14. Wärmeisolierendes Gehäuse nach einem der Ansprüche 1 oder 11, **dadurch gekennzeichnet**, daß die Begrenzungswände (12, 23, 32) der Gehäusewandungen (11, 22, 31, 37) aus diffusionsfestem Kunststoff gebildet sind.

15. Wärmeisolierendes Gehäuse nach einem der Ansprüche 1 oder 11 bis 14, **dadurch gekennzeichnet**, daß die Begrenzungswände (12, 23) der Gehäusewandungen (11, 22) an ihren freien Enden miteinander durch wenigstens weitestgehend diffusionsfeste Verbindungselemente (15, 25) verbunden sind, welche eine Wärmeleitzahl λ von 0,1 W/mK bis 21 W/mK aufweisen, vorzugsweise mit einer Wärmeleitzahl λ von maximal 1 W/mK ausgestattet sind.

16. Wärmeisolierendes Gehäuse nach einem der Ansprüche 1 oder 11 bis 15, **dadurch gekennzeichnet**, daß die Begrenzungswände (32) hinsichtlich ihrer Abmessungen den Abmessungen der einzelnen Wandabschnitte (31) des Gehäuses (30) entsprechen und miteinander zu dem Gehäuse (30) verbindbar sind.

17. Wärmeisolierendes Gehäuse nach einem der Ansprüche 1 oder 11 bis 16, **dadurch gekennzeichnet**, daß die Begrenzungswände (12) aus einer entsprechend den einzelnen Gehäusewandungen (11) des Gehäuses (10) abgewinkelten und alle Gehäusewandungen (11) miteinander verbindenden Platine gebildet sind.

18. Wärmeisolierendes Gehäuse nach einem der Ansprüche 1 oder 11 bis 17, **dadurch gekennzeichnet**, daß eine der Begrenzungswände (12,23, 32, 37) mit einem Anschluß (13) zum Absenken des Luftdrucks innerhalb des von den Begrenzungswänden (12, 23, 32) umschlossenen Zwischenraums (14, 24, 34) versehen ist.

19. Haushaltsherd mit einer Herdmuffel, **dadurch gekennzeichnet**, daß die Herdmuffel aus einem wärmeisolierenden Gehäuse (10, 30) nach einem der Ansprüche 1 bis 18 gebildet ist.

20. Haushaltskältegerät wie Kühl- oder Gefrierschrank oder dergleichen mit wenigstens einem innerhalb seines Gehäuses angeordneten und von einer Tür verschließbaren Kälteraum, **dadurch gekennzeichnet**, daß das Gehäuse (10, 30) nach einem der Ansprüche 1 bis 18 ausgebildet ist.

## Claims

1. Heat-insulating housing (10, 30) with at least one useful housing chamber which is enclosed by housing walls (11, 22, 31, 37) and at least one door, wherein the housing walls are formed of two boundary walls (12, 23, 32), which are arranged at a spacing one from the other and together substantially enclose an intermediate space (14, 24, 34), which is filled with a loosely introducible, evacuatable heat-insulation material (16, 26, 35) disposed in the final chemical state, characterised in that the heat-insulation material (16, 26, 35) introduced into the intermediate space (14, 24, 34) is formed of plate bodies which consist of pressure-resistant, open-celled heat-insulation material (16, 26, 35).

2. Heat-insulating housing according to claim 1, characterised in that the heat-insulation material formed as plate bodies is formed of open-celled polymer foams.

3. Heat-insulating housing according to claim 1 or 2, characterised in that the plate bodies are formed of cured polyurethane foam.

4. Heat-insulating housing according to claim 1 or 2, characterised in that the plate bodies are formed of cured polystyrol foams.

5. Heat-insulating housing according to one of the claims 1 to 4, characterised in that the air pressure in the intermediate space (14, 24, 34) filled by the plate bodies (16, 26, 35) is lowered relative to the ambient pressure of the housing (10, 30), wherein the boundary walls (12, 23, 32) bounding the intermediate space (14, 24, 34) are formed of a diffusion-resistant material corresponding at least approximately with the pressure difference.

6. Heat-insulating housing according to claim 5, characterised in that the air pressure in the intermediate space (14, 24, 34) filled out by the heat-insulating plate bodies formed to be open-celled amounts to between 0.1 millibars and 10 millibars, but preferably lies below 1 millibar.

7. Heat-insulating housing according to one of the claims 1 to 6, characterised in that the open-celled plate bodies with respect to their material thickness correspond approximately with the spacing between the boundary walls (12, 23, 32).

8. Heat-insulating housing according to one of the claims 1 to 7, characterised in that the pressure-resistant, heat-insulating plate bodies are arranged substantially across the entire surface of the housing (10, 30).

9. Heat-insulating housing according to one of the claims 1 to 8, characterised in that the pressure-resistant, open-celled plate bodies are provided with jointing aids (17) at their connecting places.

10. Heat-insulating housing according to one of the claims 1 to 9, characterised in that empty tubes (18, 36) for the reception of control and/or supply lines are arranged within the plate bodies.

11. Heat-insulating housing according to claim 1, characterised in that the boundary walls (12, 23, 32) are formed to be stiff in shape to the greatest possible extent.

12. Heat-insulating housing according to one of the claims 1 and 11, characterised in that the boundary walls (12, 23, 32) of the housing walls (11, 22, 31, 37) are formed of deep-drawn fine steel.

13. Heat-insulating housing according to one of the claims 1 and 11, characterised in that the boundary walls (12, 23, 32) of the housing walls (11, 22, 31, 37) are formed of steel sheet material protected against corrosion.

14. Heat-insulating housing according to one of the claims 1 and 11, characterised in that the boundary walls (12, 23, 32) of the housing walls (11, 22, 31, 37) are formed of diffusion-resistant synthetic material.

15. Heat-insulating housing according to one of the claims 1 and 11 to 14, characterised in that the boundary walls (12, 23) of the housing walls (11, 22) are connected together at their free ends by connecting elements (15, 25), which are resistant to diffusion to at least the greatest possible extent and which have a co-efficient of thermal conductivity λ of 0.1 watts per metre kelvin to 21 watts per metre kelvin, preferably being furnished with a co-efficient of thermal conductivity λ of at most 1 watt per metre kelvin.

16. Heat-insulating housing according to one of the claims 1 and 11 to 15, characterised in that the boundary walls (32) correspond with respect to their dimensions to the dimensions of the individual wall sections (31) of the housing (30) and are connectible together to form the housing (30).

17. Heat-insulating housing according to one of the claims 1 and 11 to 16, characterised in that the boundary walls (12) are formed from a plate which is bent over in accordance with the individual housing walls (11) of the housing (10) and connects all housing walls (11) together.

18. Heat-insulating housing according to one of the claims 1 and 11 to 17, characterised in that one of the boundary walls (12, 23, 32, 37) is provided with a connection (13) for lowering the air pressure within the intermediate space (14, 24, 34) enclosed by the boundary walls (12, 23, 32).

19. Domestic cooker with a cooker muffle, characterised in that the cooker muffle is formed of a heat-insulating housing (10, 30) according to one of the claims 1 to 18.

20. Domestic cooling unit such as a refrigerator or freezer cabinet or the like with at least one cold space which is arranged within its housing and is closable by a door, characterised in that the housing (10, 30) is formed of a heat-insulating housing (10, 30) according to one of the claims 1 to 18.

## Revendications

1. Carcasse calorifuge (10, 30) avec au moins un volume de carcasse utilisable, entouré par les parois de la carcasse (11, 22, 31, 37) et au moins une porte, les parois de la carcasse étant formées par deux parois de limitation (12, 23, 32) disposées à distance l'une de l'autre, parois de limitation qui enferment, ensemble, essentiellement un espace intermédiaire (14, 24, 34) qui est rempli d'une matière calorifuge (16, 26, 35) en état chimique final pouvant être introduite en vrac et évacuée, caractérisée en ce que la matière calorifuge (16, 26, 35) introduite dans l'espace intermédiaire (14, 24, 34) est constituée d'éléments en forme de plaques en une matière calorifuge (16, 26, 35) à pores ouverts et résistante à la pression.

2. Carcasse calorifuge selon la revendication 1, caractérisée en ce que la matière calorifuge sous forme d'éléments en forme de plaques est constituée de mousses polymères à pores ouverts.

3. Carcasse calorifuge selon la revendication 1 ou 2, caractérisée en ce que les éléments en forme de plaques sont fabriqués en mousse de polyuréthanne durcie.

4. Carcasse calorifuge selon la revendication 1 ou 2, caractérisée en ce que les éléments en forme de plaques sont fabriqués en mousse de polystyrène durcie.

5. Carcasse calorifuge selon l'une des revendications 1 à 4, caractérisée en ce que dans l'espace intermédiaire (14, 24, 34) rempli d'éléments en forme de plaques (16, 26, 35), la pression de l'air est diminuée par rapport à la pression de l'air ambiant de la carcasse (10, 30), les parois de limitation (12, 23, 32) entourant l'espace intermédiaire (14, 24, 34) étant en une matière qui est résistante à la diffusion au moins approximativement, de manière à correspondre à la différence de pression.

6. Carcasse calorifuge selon la revendication 5, caractérisé en ce que la pression de l'air dans l'espace intermédiaire (14, 24, 34) rempli d'éléments en forme de plaques calorifuges à pores ouverts est comprise entre 0,1 millibars et 10 millibars, mais se situe de préférence au-dessous de 1 millibar.

7. Carcasse calorifuge selon l'une des revendications 1 à 6, caractérisée en ce que les éléments en forme de plaques à pores ouverts correspondent, en ce qui concerne l'épaisseur de matière, approximativement à la distance entre les parois de limitation (12, 23, 32).

8. Carcasse calorifuge selon l'une des revendications 1 à 7, caractérisée en ce que les éléments en forme de plaques calorifuges et résistantes à la pression sont essentiellement disposés sur toute la surface de la carcasse (10, 30).

9. Carcasse calorifuge selon l'une des revendications 1 à 8, caractérisée en ce que les éléments en forme de plaques à pores ouverts et résistants à la pression sont pourvus d'auxiliaires d'assemblage (17) disposés aux points d'assemblage.

10. Carcasse calorifuge selon l'une des revendications 1 à 9, caractérisée en ce que, à l'intérieur des éléments en forme de plaques sont disposés des tubes vides (18, 36) pour recevoir des conduites de commande ou d'alimentation.

11. Carcasse calorifuge selon la revendication 1, caractérisée en ce que les parois de limitation (12, 23, 32) sont pratiquement de forme rigide.

12. Carcasse calorifuge selon l'une des revendications 1 ou 11, caractérisée en ce que les parois de limitation (12, 23, 32) des parois de la carcasse (11, 22, 31, 37) sont en acier inoxydable embouti.

13. Carcasse calorifuge selon l'une des revendications 1 ou 11, caractérisée en ce que les parois de limitation (12, 23, 32) des parois de la carcasse (11, 22, 31, 37) sont en tôle d'acier protégée contre la corrosion.

14. Carcasse calorifuge selon l'une des revendications 1 ou 11, caractérisée en ce que les parois de limitation (12, 23, 32) des parois de la carcasse (11, 22, 31, 37) sont en une matière artificielle résistante à la diffusion.

15. Carcasse calorifuge selon l'une des revendications 1 ou 11 à 14, caractérisée en ce que les parois de limitation (12, 23) des parois de la carcasse (11, 22) sont reliées entre elles, à leurs extrémités libres, au moyen d'éléments de liaison (15, 25) au moins pratiquement résistants à la diffusion, qui présentent une diffusivité thermique λ comprise entre 0,1 W/mK et 21 W/mK, de préférence une diffusivité thermique λ de 1 W/mK maximum.

16. Carcasse calorifuge selon l'une des revendications 1 ou 11 à 15, caractérisée en ce que les parois de limitation (32) correspondent, en ce qui concerne leurs dimensions, aux dimensions des différentes sections de paroi (31) de la carcasse (30) et peuvent être reliées, ensemble, à la carcasse (30).

17. Carcasse calorifuge selon l'une des revendications 1 ou 11 à 16, caractérisée en ce que les parois de limitation (12) sont constituées d'une platine inclinée selon les différentes parois (11) de la carcasse (10) reliant toutes les parois de carcasse (11) entre elles.

18. Carcasse calorifuge selon l'une des revendications 1 ou 11 à 17, caractérisée en ce qu'une des parois de limitation (12, 23, 32, 37) est pourvue d'un raccord (13) pour diminuer la pression de l'air à l'intérieur de l'espace intermédiaire (14, 24, 34) enfermé entre les parois de limitation (12, 23, 32).

19. Fourneau domestique avec un moufle, caractérisé en ce que le moufle du fourneau est une carcasse calorifuge (10, 30) selon l'une des revendications 1 à 18.

20. Appareil frigorifique domestique, tel que réfrigérateur ou congélateur ou similaire, avec au moins une chambre froide, disposée à l'intérieur de la carcasse et pouvant être fermée par une porte, caractérisé en ce que la carcasse (10, 30) est conçue selon l'une des revendications 1 à 18.
